# EUROPEAN PATENT APPLICATION

(11) **EP 4 525 333 A1**
(43) Date of publication of application: **19.03.2025**
(21) Application number: 24200980.1
(22) Date of filing: 18.09.2024
(51) Int. Cl.: H04J 14/02, H04J 14/06

(54) **DIRECT DETECTION BASED PASSIVE OPTICAL NETWORK USING DUALPOLARIZATION COMMUNICATIONS**

(30) Priority: 18.09.2023 US 202318469532
(71) Applicant: Nokia Solutions and Networks Oy, 02610 Espoo (FI)
(72) Inventor: VAN VEEN, Doutje, New Providence, 07974 (US); HOUTSMA, Vincent, New Providence, 07974 (US); BORKOWSKI, Robert, Murray Hill, 07974-0636 (US); VIJAYAN, Kovendhan, Edison, 08817 (US)
(74) Representative: IP HILLS NV

(57) **Abstract**

Various example embodiments for supporting optical communications in an optical communication system may be configured to support dual-polarization based communications within the context of a direct detection based point-to-multipoint optical network (e.g., a passive optical network (PON) based on direction detection). Various example embodiments for supporting optical communications in an optical communication system may be configured to support optical communications based on application of dual polarizations to each of one or more wavelengths within the context of a direct detection based point-to-multipoint optical network to support multiple optical channels within the direct detection based point-to-multipoint optical network (e.g., a single wavelength with two polarizations to provide two optical channels, two wavelengths each with two polarizations to provide four optical channels, three wavelengths each with two polarizations to provide six optical channels, and so forth) and, thus, support increased data carrying capacity within the direct detection based point-to-multipoint optical network.

## Description

### TECHNICAL FIELD

Various example embodiments relate generally to communication systems and, more particularly but not exclusively, to supporting communications in optical communication systems.

### BACKGROUND

Various communications technologies may be used to support communications in various types of communication systems.

### SUMMARY

In at least some example embodiments, an apparatus includes a transmitter configured to modulate data on a set of optical channels which is based on use of a pair of polarizations on each of one or more wavelengths and propagate, via a passive optical network, an optical signal including the set of optical channels. In at least some example embodiments, the transmitter is configured to modulate data on a first optical channel of the set of optical channels which is based on use of a first polarization of the pair of polarizations on a first wavelength of the one or more wavelengths, modulate data on a second optical channel of the set of optical channels which is based on use of a second polarization of the pair of polarizations on the first wavelength of the one or more wavelengths, and multiplex the first optical channel and the second optical channel to form the set of optical channels. In at least some example embodiments, the transmitter includes a laser configured to generate the first wavelength of the one or more wavelengths, a first modulator configured to modulate data on a first optical channel of the set of optical channels which is based on use of a first polarization of the pair of polarizations on a first wavelength of the one or more wavelengths, a second modulator configured to modulate data on a second optical channel of the set of optical channels which is based on use of a second polarization of the pair of polarizations on the first wavelength of the one or more wavelengths, and a polarization beam combiner configured to combine the first optical channel and the second optical channel to form the optical signal including the set of optical channels. In at least some example embodiments, the transmitter is configured to modulate data onto a first pair of optical channels which is based on use of the pair of polarizations on a first wavelength of the one or more wavelengths, modulate data onto a second pair of optical channels which is based on use of the pair of polarizations on a second wavelength of the one or more wavelengths, and multiplex the first pair of optical channels and the second pair of optical channels to form the set of optical channels. In at least some example embodiments, the transmitter includes a first laser configured to generate a first wavelength of the one or more wavelengths, a second laser configured to generate a second wavelength of the one or more wavelengths, a first pair of modulators configured to modulate data onto a first set of two optical channels which are based on use of the pair of polarizations on the first wavelength, wherein the first set of two optical channels includes a first optical channel based on the first wavelength and a first polarization and a second optical channel based on the first wavelength and a second polarization, a second pair of modulators configured to modulate data onto a second set of two optical channels which is based on use of the pair of polarizations on the second wavelength, wherein the second set of two optical channels includes a third optical channel based on the second wavelength and the first polarization and a fourth optical channel based on the second wavelength and the second polarization, a first polarization beam combiner configured to combine the first optical channel and the second optical channel to form a first pair of optical channels based on the first wavelength, a second polarization beam combiner configured to combine the third optical channel and the fourth optical channel to form a second pair of optical channels based on the second wavelength, and a wavelength division multiplexer configured to multiplex the first pair of optical channels based on the first wavelength and the second pair of optical channels based on the second wavelength to form the optical signal including the set of optical channels. In at least some example embodiments, the transmitter includes a first laser configured to generate a first wavelength of the one or more wavelengths, a second laser configured to generate a second wavelength of the one or more wavelengths, a first pair of modulators configured to modulate data onto a first set of two optical channels which are based on use of the pair of polarizations on the first wavelength, wherein the first set of two optical channels includes a first optical channel based on the first wavelength and a first polarization and a second optical channel based on the first wavelength and a second polarization, a second pair of modulators configured to modulate data onto a second set of two optical channels which is based on use of the pair of polarizations on the second wavelength, wherein the second set of two optical channels includes a third optical channel based on the second wavelength and the first polarization and a fourth optical channel based on the second wavelength and the second polarization, a first wavelength division multiplexer configured to combine the first optical channel and the third optical channel to form a first pair of optical channels based on the first polarization, a second wavelength division multiplexer configured to combine the second optical channel and the fourth optical channel to form a second pair of optical channels based on the second polarization, and a polarization beam combiner configured to combine the first pair of optical channels based on the first polarization and the second pair of optical channels based on the second polarization to form the optical signal including the set of optical channels. In at least some example embodiments, the transmitter includes a first optical channel generator configured to generate a first pair of optical channels based on modulation of data onto the pair of polarizations on a first wavelength of the one or more wavelengths, a second optical channel generator configured to generate a second pair of optical channels based on modulation of data onto the pair of polarizations on a second wavelength of the one or more wavelengths, and a controller configured to dynamically activate and deactivate the second optical channel generator for controlling generation of the second pair of optical channels. In at least some example embodiments, the apparatus comprises an optical line terminal (OLT) configured to be deployed in the passive optical network. In at least some example embodiments, the apparatus comprises an optical network unit (ONU) configured to be deployed in the passive optical network. In at least some example embodiments, a method includes modulating data on a set of optical channels which is based on use of a pair of polarizations on each of one or more wavelengths and propagating, via a passive optical network, an optical signal including the set of optical channels. In at least some example embodiments, an apparatus includes means for modulating data on a set of optical channels which is based on use of a pair of polarizations on each of one or more wavelengths and means for propagating, via a passive optical network, an optical signal including the set of optical channels.

In at least some example embodiments, an apparatus includes a receiver configured to receive, via a passive optical network, an optical signal including a set of optical channels which is based on use of a pair of polarizations on each of one or more wavelengths and recover, from the optical signal based on at least one of polarization demultiplexing or polarization selection, at least one of the optical channels from the set of optical channels. In at least some example embodiments, the receiver includes a wavelength demultiplexer configured to receive the optical signal and demultiplex the optical signal into a first multiplexed optical signal based on a first wavelength of the one or more wavelengths and a second multiplexed optical signal based on a second wavelength of the one or more wavelengths, a first polarization demultiplexer configured to demultiplex the first multiplexed optical signal into a first optical channel based on the first wavelength and a first polarization of the pair of polarizations and a second optical channel based on the first wavelength and a second polarization of the pair of polarizations, a second polarization demultiplexer configured to demultiplex the second multiplexed optical signal into a third optical channel based on the second wavelength and the first polarization and a fourth optical channel based on the second wavelength and the second polarization, and a set of detectors configured to recover a set of output signals from the first optical channel, the second optical channel, the third optical channel, and the fourth optical channel. In at least some example embodiments, the receiver includes a polarization beam splitter configured to receive the optical signal and split the optical signal into a first multiplexed optical signal based on a first polarization of the pair of polarizations and a second multiplexed optical signal based on a second polarization of the pair of polarizations, a first wavelength demultiplexer configured to demultiplex the first multiplexed optical signal into a first optical channel based on a first wavelength of the one or more wavelengths and the first polarization and a second optical channel based on a second wavelength of the one or more wavelengths and the first polarization, a second wavelength demultiplexer configured to demultiplex the second multiplexed optical signal into a third optical channel based on the first wavelength and the second polarization and a fourth optical channel based on the second wavelength and the second polarization, and a set of detectors configured to recover a second of output signals from the first optical channel, the second optical channel, the third optical channel, and the fourth optical channel. In at least some example embodiments, the receiver includes a polarization beam splitter configured to recover, from the optical signal based on a particular polarization of the pair of polarizations, a pair of optical channels based on the particular polarization, a wavelength demultiplexer configured to demultiplex, from the pair of optical channels, a first optical channel based on the particular polarization and a first wavelength of the one or more wavelengths and a second optical channel based on the particular polarization and a second wavelength of the one or more wavelengths, and a pair of detectors configured to recover a set of output signals from the first optical channel based on the first wavelength and the second optical channel based on the second wavelength. In at least some example embodiments, the receiver includes a wavelength demultiplexer configured to receive the optical signal and select, from the optical signal based on a particular wavelength of the one or more wavelengths, a pair of optical channels based on the particular wavelength, a polarization beam splitter configured to recover, from the pair of optical channels, a first optical channel based on a first polarization of the pair of polarizations and a second optical channel based on a second polarization of the pair of polarizations, and a pair of detectors configured to recover a pair of output signals from the first optical channel based on the first polarization and the second optical channel based on the second polarization. In at least some example embodiments, the receiver includes a wavelength demultiplexer configured to receive the optical signal and select, from the optical signal based on a particular wavelength of the one or more wavelengths, a pair of optical channels based on the particular wavelength, a polarization selector configured to select, from the pair of optical channels based on a particular polarization of the pair of polarizations, one of the optical channels, and a detector configured to recover an output signal from the one of the optical channels. In at least some example embodiments, the receiver includes a tunable filter configured to receive the optical signal and select, from the optical signal based on a particular wavelength of the one or more wavelengths, a pair of optical channels based on the particular wavelength, a polarization selector configured to select, from the pair of optical channels based on a particular polarization of the pair of polarizations, one of the optical channels based on the particular polarization, and a detector configured to recover an output signal from the one of the optical channels. In at least some example embodiments, the apparatus comprises an optical line terminal (OLT) configured to be deployed in the passive optical network. In at least some example embodiments, the apparatus comprises an optical network unit (ONU) configured to be deployed in the passive optical network. In at least some example embodiments, a method includes receiving, via a passive optical network, an optical signal including a set of optical channels which is based on use of a pair of polarizations on each of one or more wavelengths and recovering, from the optical signal based on at least one of polarization demultiplexing or polarization selection, at least one of the optical channels from the set of optical channels. In at least some example embodiments, an apparatus includes means for receiving, via a passive optical network, an optical signal including a set of optical channels which is based on use of a pair of polarizations on each of one or more wavelengths and means for recovering, from the optical signal based on at least one of polarization demultiplexing or polarization selection, at least one of the optical channels from the set of optical channels.

### BRIEF DESCRIPTION OF THE DRAWINGS

The teachings herein can be readily understood by considering the following detailed description in conjunction with the accompanying drawings, in which:
FIG. 1 depicts an example embodiment of a passive optical network (PON) including an optical line terminal (OLT) and a set of optical network units (ONUs) configured to support dual-polarization communications;
FIG. 2 depicts an example embodiment of a dual-wavelength dual-polarization transmitter for use by an OLT for downstream transmission or for use by an ONU for upstream transmission;
FIG. 3 depicts an example embodiment of a dual-wavelength dual-polarization transmitter for use by an OLT for downstream transmission or for use by an ONU for upstream transmission;
FIG. 4 depicts an example embodiment of a single-wavelength dual-polarization transmitter for use by an OLT for downstream transmission or for use by an ONU for upstream transmission;
FIG. 5 depicts an example embodiment of a flexible-wavelength dual-polarization transmitter for use by an OLT for downstream transmission or for use by an ONU for upstream transmission;
FIG. 6 depicts an example embodiment of a dual-wavelength dual-polarization receiver for use by an ONU for downstream reception or for use by an OLT for upstream reception;
FIG. 7 depicts an example embodiment of a single-wavelength dual-polarization receiver for use by an ONU for downstream reception or for use by an OLT for upstream reception;
FIG. 8 depicts an example embodiment of a single-wavelength single-polarization receiver for use by an ONU for downstream reception or for use by an OLT for upstream reception;
FIG. 9 depicts an example embodiment of a single-wavelength single-polarization receiver for use by an ONU for downstream reception or for use by an OLT for upstream reception;
FIG. 10 depicts an example embodiment of a method for use by a transmitter, of an OLT or an ONU, for supporting dual-polarization communications;
FIG. 11 depicts an example embodiment of a method for use by a receiver, of an ONU or an OLT, for supporting dual-polarization communications; and
FIG. 12 depicts an example embodiment of a method for use by an OLT or an ONU for supporting dual-polarization communications using one or more wavelengths; and
FIG. 13 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting optical communications in an optical communication system are presented herein.

Various example embodiments for supporting optical communications in an optical communication system may be configured to support dual-polarization based communications within the context of a direct detection based point-to-multipoint optical network (e.g., a passive optical network (PON) based on direction detection, such as an IM-DD-based PON). Various example embodiments for supporting optical communications in an optical communication system may be configured to support optical communications based on application of dual polarizations to each of one or more wavelengths within the context of a direct detection based point-to-multipoint optical network to support multiple optical channels within the direct detection based point-to-multipoint optical network (e.g., a single wavelength with two polarizations to provide two optical channels, two wavelengths each with two polarizations to provide four optical channels, three wavelengths each with two polarizations to provide six optical channels, and so forth) and, thus, support increased data carrying capacity within the direct detection based point-to-multipoint optical network. For example, within the context of a PON configured to support a 100Gbps data rate per channel (namely, per wavelength and per polarization, various multiples of the 100Gbps data rate may be achieved based on application of dual polarizations to each of one or more wavelengths (e.g., 200Gbps based on use of single-wavelength dual-polarization communications, 400Gbps based on use of dual-wavelength dual-polarization communications, 600Gbps based on use of triple-wavelength dual-polarization communications, and so forth).

Various example embodiments for supporting optical communications in an optical communication system may be configured to support optical communications based on use of simplified transmitter configurations and/or simplified receiver configurations. For example, where the OLT is configured to support dual-wavelength dual-polarization communications downstream to a set of ONUs, one or more of the ONUs may be configured to support recovery of each of the four optical channels based on use of a dual-wavelength dual-polarization receiver, one or more of the ONUs may be configured to support recovery of two of the four optical channels based on use of a single-wavelength dual-polarization receiver, one or more of the ONUs may be configured to support recovery of one of the four optical channels based on use of a single-wavelength single-polarization receiver, or the like, as well as various combinations thereof. For example, where the OLT is configured to support dual-wavelength dual-polarization communications upstream from a set of ONUs, one or more of the ONUs may be configured to support transmission of each of the four optical channels based on use of a dual-wavelength dual-polarization transmitter, one or more of the ONUs may be configured to support transmission of two of the four optical channels based on use of a single-wavelength dual-polarization transmitter, one or more of the ONUs may be configured to support transmission of one of the four optical channels based on use of a single-wavelength single-polarization transmitter, or the like, as well as various combinations thereof. It will be appreciated that various other configurations may be supported, thereby enabling flexibility of OLT and/or ONU designs to realize various benefits of dual-polarization based communications while still supporting a variety of ONU designs including simpler, lower-cost ONUs which may be deployed within various PONs.

It will be appreciated that these and various other example embodiments and advantages or potential advantages of supporting dual-polarization communications in a direct detection based PON may be further understood by way of reference to the various figures, which are discussed further below.

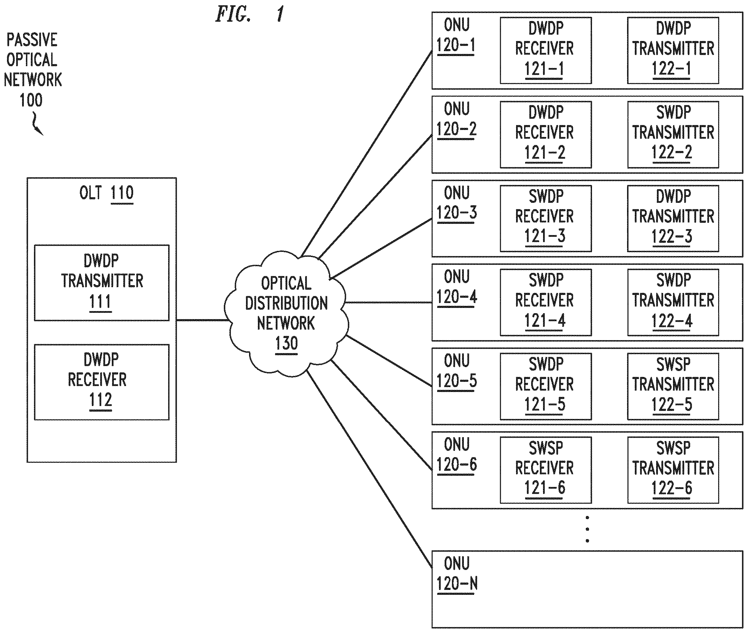

FIG. 1 depicts an example embodiment of a passive optical network (PON) including an optical line terminal (OLT) and a set of optical network units (ONUs) configured to support dual-polarization communications.

The PON 100 may be configured to provide network access to a set of customers, based on optical communications, in various contexts and based on various technologies. For example, the PON 100 may operate as a point-to-multipoint (P2MP) data distribution system configured to provide broadband network access over "the last mile" for customers (e.g., the final portion of a telecommunications network that supports communications for customers, including delivering communications to the customers and supporting communications from the customers). For example, the PON 100 may operate using various types of PON technologies and various PON standards (e.g., the G.9804 standard for 50G PON). For example, the PON 100 may be based on direct detection (e.g., based on IM-DD or other suitable types of direct detection). It will be appreciated that the PON 100 may be used in various other contexts, configured based on various other PON technologies and/or PON standards, or the like, as well as various combinations thereof.

The PON 100 may include various communication elements configured to support optical communications. The PON 100 includes an optical line terminal (OLT) 110 and a set of optical network units (ONUs) 120-1 - 120-N (collectively, ONUs 120) connected via an optical distribution network (ODN) 130. The PON 100 may be configured to support downstream (DS) communications from the OLT 110 to the ONUs 120 via the ODN 130 and upstream (US) communications from the ONUs 120 to the OLT 110 via the ODN 130. The PON 100, as discussed further below, may be configured to support DS communications from the OLT 110 to the ONUs 120 and US communications from the ONUs 120 to the OLT 110 based on application of dual-polarization to one or more wavelengths to provide various combinations of wavelengths and polarizations. It will be appreciated that the PON 100 may include various other elements (which have been omitted for purposes of clarity).

The OLT 110 is configured to support communications between the ONUs 120 and one or more upstream networks (omitted for purposes of clarity). The OLT 110 may be located in a central location, such as a central office (CO) or other suitable location. For example, the one or more upstream networks may include one or more core communication networks configured to support communications of the OLT 110 and, thus, of the ONUs 120. For example, the one or more upstream networks may include the Internet, data center networks, enterprise networks, or the like, as well as various combinations thereof. For example, the OLT 110 may be configured to forward data received from the one or more upstream networks downstream toward the ONUs 120 via the ODN 130 and to forward data received from the ONUs 120 via the ODN 130 upstream toward the one or more upstream networks. The OLT 110, as discussed further below, may be configured to support DS communications to the ONUs 120 and US communications from the ONUs 120 based on application of dual-polarization to one or more wavelengths to provide various combinations of wavelengths and polarizations.

The ONUs 120 each are configured to support communications between the OLT 110 and one or more downstream networks or devices (omitted for purposes of clarity). The ONUs 120 may be located at respective user premises or other suitable locations. For example, the one or more downstream networks or devices for an ONU 120 may include one or more local area networks (LANs) of the customer, one or more communication devices of the customer (e.g., a modem, a router, a switch, a set top box, a smart television, a gaming system, a computer, a smartphone, or the like, as well as various combinations thereof). For example, an ONU 120 may be configured to forward data received from the OLT 110 via the ODN 130 downstream toward one or more downstream networks or devices and to forward data received from the one or more downstream networks or devices upstream toward the OLT 110 via the ODN 130. The ONUs 120, as discussed further below, may be configured to support DS communications from the OLT 110 and US communications to the OLT 110 based on application of dual-polarization to one or more wavelengths to provide various combinations of wavelengths and polarizations.

The ODN 130 may be a data distribution system configured to support communications between the OLT 110 and the ONUs 120, including DS communications from the OLT 110 to the ONUs 120 and US communications from the ONUs 120 to the OLT 110. The ODN 130, for purposes of clarity, is simply depicted as an optical fiber or set of optical fibers configured to support propagation of optical signals downstream from the OLT 110 to the ONUs 120 and upstream from the ONUs 120 to the OLT 110; however, it will be appreciated that the ODN 130 may be implemented using various different components which may be arranged in various different configurations. For example, the ODN 130 may include various passive optical components (e.g., optical fibers, optical couplers, optical splitters, and the like) which do not require power to distribute data signals between the OLT 110 and the ONUs 120. For example, the ODN 130 may be implemented using a branching configuration or other suitable P2MP configurations. It will be appreciated that the ODN 130 may include various other elements for supporting communications between the OLT 110 and the ONUs 120.

The PON 100 is configured to support communications between the OLT 110 and the ONUs 120 based on application of dual-polarization to one or more wavelengths to provide various combinations of wavelengths and polarizations. The PON 100 may be configured to support various transmitter configurations for supporting dual-polarization communications and/or various receiver configurations for supporting dual-polarization communications. For example, transmitters employed within the OLT 110 for DS communications and/or employed within ONUs 120 for US communications may include transmitters configured to support application of dual polarizations to one or more wavelengths to provide a set of optical channels (e.g., single-wavelength dual-polarization transmitters configured to support two optical channels, dual-wavelength dual-polarization transmitters configured to support four optical channels, tri-wavelength dual-polarization transmitters configured to support six optical channels, or the like). For example, receivers employed within the ONUs 120 for DS communications and/or employed within the OLT 110 for US communications may include receivers configured to support recovery of one or more optical channels from a set of optical channels formed based on application of dual polarizations to one or more wavelengths (e.g., a dual-wavelength dual-polarization receiver configured to support recovery of four optical channels, a single-wavelength dual-polarization receiver configured to support recovery of two optical channels, a single-wavelength single-polarization receiver configured to support recovery of one optical channel, or the like).

The PON 100 is configured to support communications between the OLT 110 and the ONUs 120 based on application of dual-polarization to one or more wavelengths to provide various combinations of wavelengths and polarizations that may support various numbers of optical channels, thereby providing flexibility in the data rates supported in the DS direction and the US direction in the PON 100.

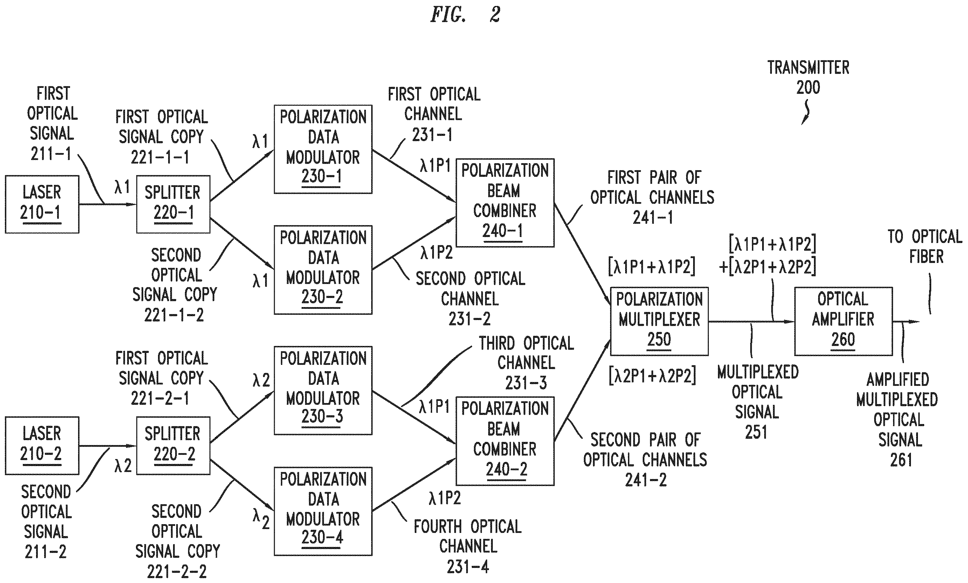

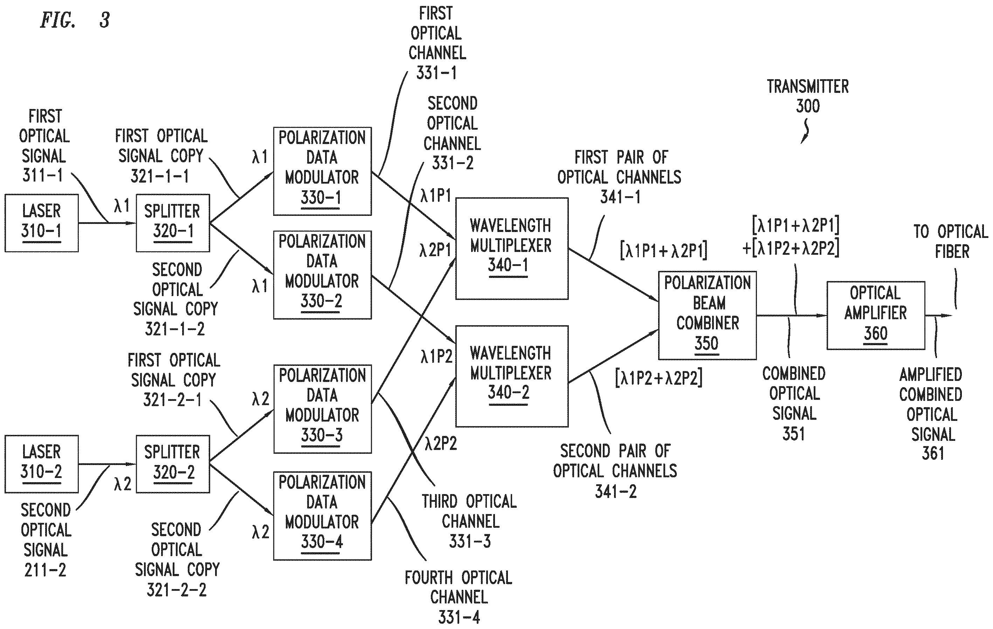

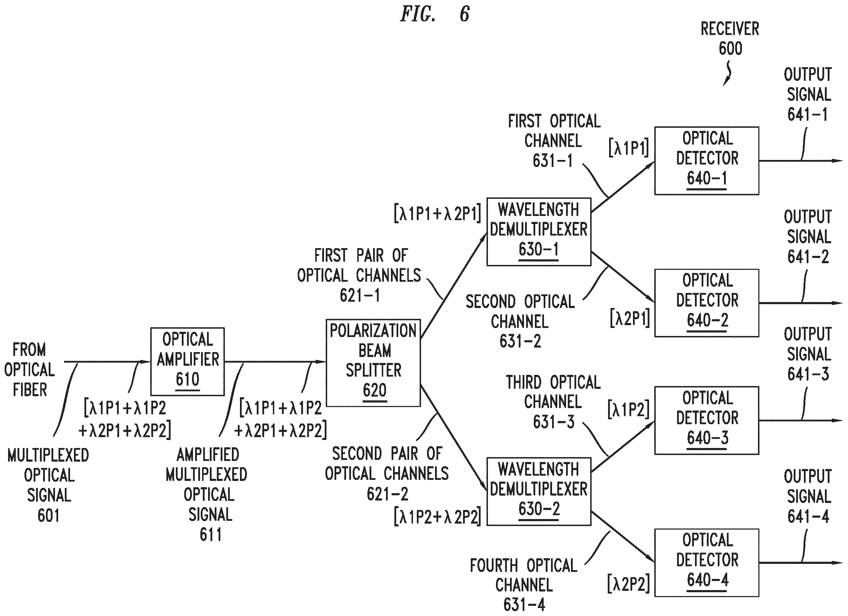

As illustrated in FIG. 1, the OLT 110 supports dual-wavelength dual-polarization communication in the DS direction using a dual-wavelength dual-polarization transmitter 111 (example embodiments of which are presented with respect to FIG. 2 and FIG. 3) and supports dual-wavelength dual-polarization communication in the US direction using a dual-wavelength dual-polarization receiver 112 (an example embodiment of which is presented with respect to FIG. 6). It will be appreciated that, although primarily presented with respect to a specific transmitter configuration (namely, dual-wavelength dual-polarization enabling support for four optical channels) and a specific receiver configuration (namely, dual-wavelength dual-polarization enabling support for four optical channels) of the OLT 110, the OLT 110 also or alternatively may support various other transmitter configurations (e.g., single-wavelength dual-polarization, tri-wavelength dual-polarization, or the like) and/or various other receiver configurations (e.g., single-wavelength dual-polarization, tri-wavelength dual-polarization, or the like). It will be appreciated that the OLT 110 may be configured to support various other transmitter configurations and/or receiver configurations in accordance with the capabilities of the set of ONUs 120 to be supported by the OLT 110 (which also may include support for "legacy" communications (communications which do not rely on multiple polarizations), such as where the OLT 110 and one or more of the ONUs 120 may support multi-wavelength single-polarization communications in the DS and/or US directions, single-wavelength single-polarization communications in the DS and/or US directions, or the like, as well as various combinations thereof).

As illustrated in FIG. 1, some of the ONUs 120 may be configured to support dual-wavelength dual-polarization communications supported by the OLT 110 as discussed above; however, at least some of the ONUs 120 may not be configured to support dual-wavelength dual-polarization communications in the DS and/or US directions and, instead, may only be configured to support lower rate configurations (e.g., less complex and lower cost ONUs 120 may support configurations that support lower data rates in the DS direction and/or in the US direction).

For example, ONU 120-1 supports dual-wavelength dual-polarization communication in the DS direction using a dual-wavelength dual-polarization receiver 121-1 (an example embodiment of which is presented with respect to FIG. 6) and supports dual-wavelength dual-polarization communication in the US direction using a dual-wavelength dual-polarization transmitter 122-1 (example embodiments of which are presented with respect to FIG. 2 and FIG. 3).

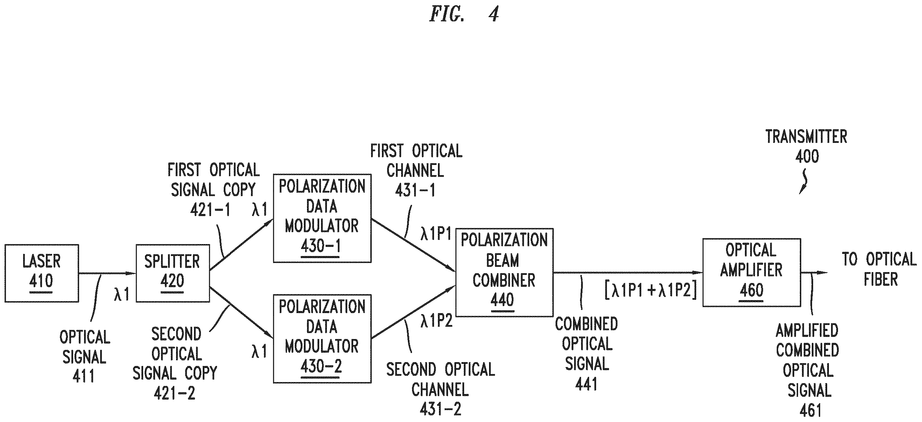

For example, ONU 120-2 supports dual-wavelength dual-polarization communication in the DS direction using a dual-wavelength dual-polarization receiver 121-2 (an example embodiment of which is presented with respect to FIG. 6) and supports single-wavelength dual-polarization communication in the US direction using a single-wavelength dual-polarization transmitter 122-2 (an example embodiment of which is presented with respect to FIG. 4).

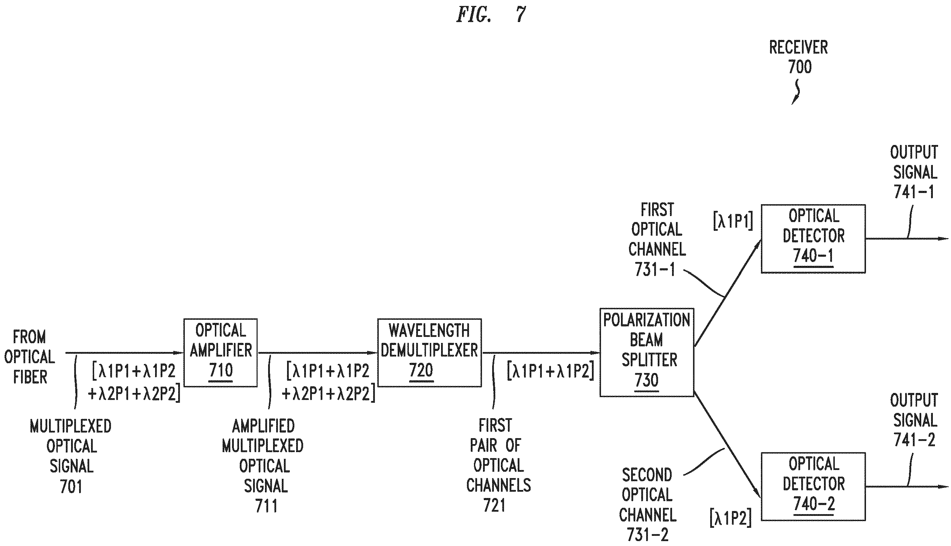

For example, ONU 120-3 supports single-wavelength dual-polarization communication in the DS direction using a single-wavelength dual-polarization receiver 121-3 (an example embodiment of which is presented with respect to FIG. 7) and dual-wavelength dual-polarization communication in the US direction using a dual-wavelength dual-polarization transmitter 122-3 (example embodiments of which are presented with respect to FIG. 2 and FIG. 3).

For example, ONU 120-4 supports single-wavelength dual-polarization communication in the DS direction using a single-wavelength dual-polarization receiver 121-4 (an example embodiment of which is presented with respect to FIG. 7) and single-wavelength dual-polarization communication in the US direction using a single-wavelength dual-polarization transmitter 122-4, an example embodiment of which is presented with respect to FIG. 4).

For example, ONU 120-5 supports single-wavelength dual-polarization communication in the DS direction using a single-wavelength dual-polarization receiver 121-5 (an example embodiment of which is presented with respect to FIG. 7) and single-wavelength single-polarization communication in the US direction using a single-wavelength single-polarization transmitter 122-5 (an example embodiment of which has been omitted for purposes of clarity).

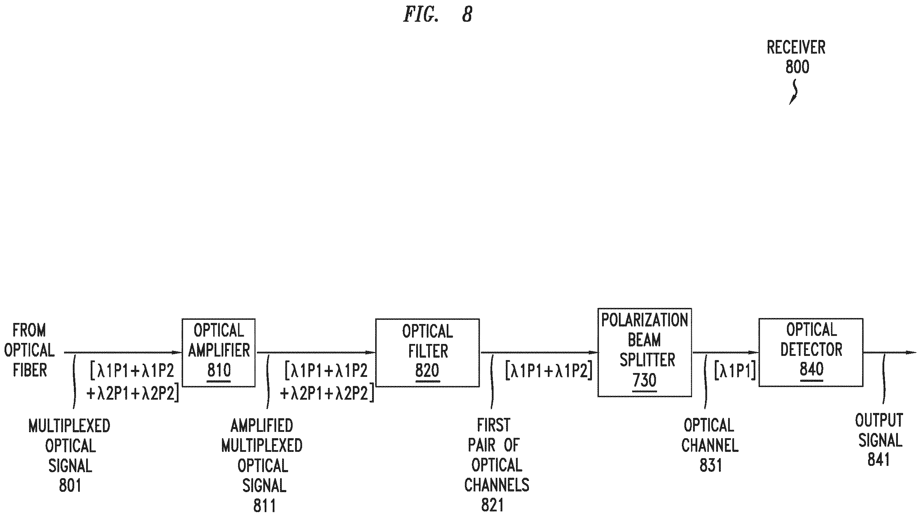

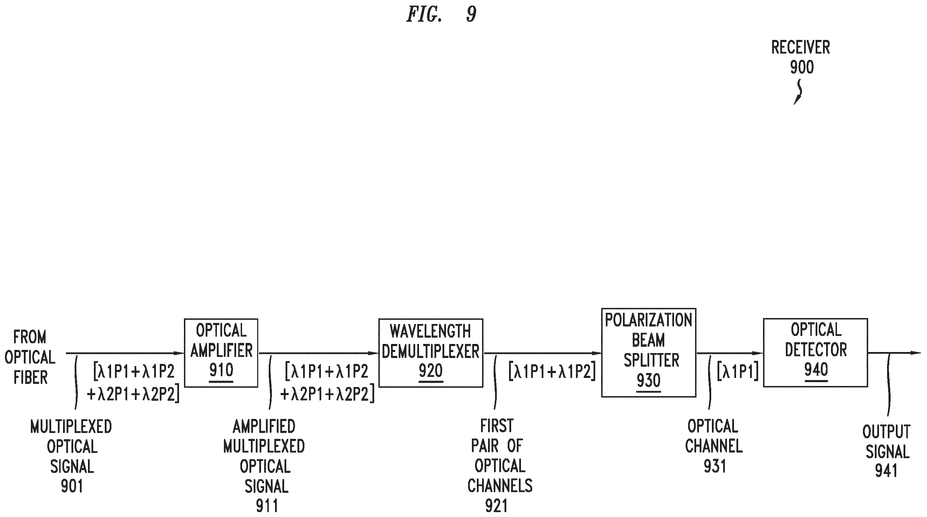

For example, ONU 120-6 supports single-wavelength single-polarization communication in the DS direction using a single-wavelength single-polarization receiver 121-6 (example embodiments of which are presented with respect to FIG. 8 and FIG. 9) and single-wavelength single-polarization communication in the US direction using a single-wavelength single-polarization transmitter 122-6 (an example embodiment of which has been omitted for purposes of clarity).

It will be appreciated that, although primarily presented with respect to specific transmitter configurations and specific receiver configurations in each of the ONUs 120, any of the ONUs 120 also or alternatively may support various other receiver configurations (e.g., single-wavelength dual-polarization, tri-wavelength dual-polarization, or the like) and/or various other transmitter configurations (e.g., single-wavelength dual-polarization, tri-wavelength dual-polarization, or the like). It will be appreciated that each of the ONUs 120 may be configured to support various other receiver configurations and/or transmitter configurations in accordance with the capabilities in accordance with the capability of the OLT 110 to support such configurations (which also may include support for "legacy" communications (communications which do not rely on multiple polarizations), such as where one or more of the ONUs 120 may support multi-wavelength single-polarization communications in the DS and/or US directions, single-wavelength single-polarization communications in the DS and/or US directions, or the like, as well as various combinations thereof).

It will be appreciated that the wide variation among the ONUs 120 in terms of the receiver capabilities and transmitter capabilities of the ONUs 120 is indicative of the flexibility of the PON 100 in enabling the OLT 110 to support increased data rates for at least some of the ONUs 120 while still supporting lower data rates for legacy ONUs 120 which are unable to take advantage of the available higher data rates.

It will be appreciated that, although specific examples of transmitters and receivers are depicted in FIG. 1, various other configurations may be supported (e.g., various other transmitter configurations and/or receiver configurations also or alternatively may be used within the OLT 110, various other receiver configurations and/or transmitter configurations also or alternatively may be used within or one or more ONUs 120, or the like, as well as various combinations thereof).

It will be appreciated that, while the OLT 110 may support various other transmitter configurations and/or receiver configurations and the ONUs 120 may support various other receiver configurations and/or transmitter configurations, the transmitter and receiver configurations supported by the OLT 110 may constrain the receiver and transmitter configurations supported by the ONUs 120 and, similarly, the receiver and transmitter configurations supported by the ONUs 120 may dictate the need to support particular transmitter and receiver configurations at the OLT 110 in order to enable the OLT 110 to support the full set of ONUs 120. It will be appreciated that, generally speaking, the transmitter and receiver complexity at the OLT 110 is at least equal to or perhaps higher than the receiver and transmitter complexity at the ONUs 120, although exceptions are possible as well.

It will be appreciated that, although primarily presented with respect to specific combinations of transmitter configurations and receiver configurations related to modulation in one polarization and/or modulation in both polarizations, various other transmitter configurations and/or receiver configurations may be employed in various combinations for supporting communications based on one polarization and/or both polarizations. For example, a transmitter may modulate in one polarization only (e.g., as a SW-SP transmitter) or may modulate the same data on both polarizations and, in both cases, the signal can be received by a receiver that is incapable of demultiplexing two polarization states (e.g., as a SW-SP receiver), thereby enabling use of single polarization or dual polarization communications with simpler receivers. It will be appreciated that, in the case where dual polarization is used, the data may be recovered with potentially improved performance due to redundancy of the data.

It will be appreciated that any other suitable transmitter configurations and/or receiver configurations may be utilized by the OLT 110 and/or any of the ONUs 120 to support any suitable data rates or combinations of data rates to enable successful exchange of data from the OLT 110 to the ONUs 120 in the DS direction and from the ONUs 120 to the OLT 110 in the US direction.

FIG. 2 depicts an example embodiment of a dual-wavelength dual-polarization transmitter for use by an OLT for downstream transmission or for use by an ONU for upstream transmission.

As illustrated in FIG. 2, the transmitter 200 includes a pair of lasers 210-1 and 210-2 (collectively, lasers 210), a pair of splitters 220-1 and 220-2 (collectively, splitters 220), a set of four polarization data modulators 230-1 - 230-4 (collectively, polarization data modulators 230), a pair of polarization beam combiners 240-1 and 240-2 (collectively, polarization beam combiners 240), a wavelength division multiplexer 250, and an optical amplifier 260. In the transmitter 200, the laser 210-1, the splitter 220-1, the polarization data modulators 230-1 and 230-2, and the polarization beam combiner 240-1 may be considered to constitute a first branch of the transmitter 200 that is configured to generate two optical channels based on a first wavelength λ1 and dual polarizations and, similarly, the laser 210-2, the splitter 220-2, the polarization data modulators 230-3 and 230-4, and the polarization beam combiner 240-2 may be considered to constitute a second branch of the transmitter 200 that is configured to generate two optical channels based on a second wavelength λ2 and dual polarizations. The two branches of the transmitter 200 feed into the wavelength division multiplexer 250 for multiplexing of the pairs of optical channels to form a multiplexed optical signal that is then amplified by the optical amplifier 260 before being transmitted on the optical fiber. It will be appreciated that either or both of the lasers 210 may be wavelength tunable for controlling the wavelengths used by the transmitter 200 for communication.

In the first branch of the transmitter 200, the two optical channels based on the first wavelength λ1 and dual polarizations may be generated and transmitted as follows. The laser 210-1 generates a first optical signal 211-1 at the first wavelength λ1 and provides the first optical signal 211-1 to an input of the optical splitter 220-1. The optical splitter 220-1 splits the first optical signal 211-1 into a first optical signal copy 221-1-1 which is provided to an input of the polarization data modulator 230-1 and a second optical signal copy 221-1-2 which is provided to an input of the polarization data modulator 230-2. The polarization data modulator 230-1 modulates the first optical signal copy 221-1-1 with data for a first polarization P1 to provide a first optical channel 231-1 based on the first wavelength λ1 and the first polarization P1, and provides the first optical channel 231-1 to a first input to the polarization beam combiner 240-1. The polarization data modulator 230-2 modulates the second optical signal copy 221-1-2 with data for a second polarization P2 to provide a second optical channel 231-2 based on the first wavelength λ1 and the second polarization P2, and provides the second optical channel 231-2 to a second input to the polarization beam combiner 240. The polarization beam combiner 240-1 receives the first optical channel 231-1 and the second optical channel 231-2 and combines the first optical channel 231-1 and the second optical channel 231-2, based on polarization multiplexing of the first polarization P1 and the second polarization P2, to provide a first pair of optical channels 241-1 based on the first wavelength λ1 and dual polarizations. The polarization beam combiner 240-1 provides the first pair of optical channels 241-1 to an input of the wavelength division multiplexer 250 for multiplexing with the other two optical channels from the second branch of the transmitter 200 before amplification and transmission on the optical fiber.

In the second branch of the transmitter 200, the two optical channels based on the second wavelength λ2 and dual polarizations may be generated and transmitted as follows. The laser 210-2 generates a second optical signal 211-2 at the second wavelength λ2 and provides the second optical signal 211-2 to an input of the optical splitter 220-2. The optical splitter 220-2 splits the first optical signal 211-2 into a first optical signal copy 221-2-1 which is provided to an input of the polarization data modulator 230-3 and a second optical signal copy 221-2-2 which is provided to an input of the polarization data modulator 230-4. The polarization data modulator 230-3 modulates the first optical signal copy 221-2-1 with data for a first polarization P1 to provide a third optical channel 231-3 based on the second wavelength λ2 and the first polarization P1, and provides the third optical channel 231-3 to a first input to the polarization beam combiner 240-2. The polarization data modulator 230-4 modulates the second optical signal copy 221-2-2 with data for a second polarization P2 to provide a fourth optical channel 231-4 based on the second wavelength λ2 and the second polarization P2, and provides the fourth optical channel 231-4 to a second input to the polarization beam combiner 240-2. The polarization beam combiner 240-2 receives the third optical channel 231-3 and the fourth optical channel 231-4 and combines the third optical channel 231-3 and the fourth optical channel 231-4, based on polarization multiplexing of the first polarization P1 and the second polarization P2, to provide a second pair of optical channels 241-2 based on the second wavelength λ2 and dual polarizations. The polarization beam combiner 240-2 provides the second pair of optical channels 241-2 to an input of the wavelength division multiplexer 250 for multiplexing with the other two optical channels from the first branch of the transmitter 200 before amplification and transmission on the optical fiber.

In the transmitter 200, the wavelength division multiplexer 250 receives the first pair of optical channels 241-1 based on the first wavelength λ1 and the dual polarizations from the first branch of the transmitter 200, receives the second pair of optical channels 241-2 based on the second wavelength λ2 and the dual polarizations from the second branch of the transmitter 300, and multiplexes the first pair of optical channels 241-1 and the second pair of optical channels 241-2 based on wavelength multiplexing to form a multiplexed optical signal 251 that includes each of the four optical channels 241. The wavelength division multiplexer 250 provides the multiplexed optical signal 251 to an input to the optical amplifier 260. The optical amplifier 260 amplifies the multiplexed optical signal 251 to provide an amplified multiplexed optical signal 261. The transmitter 200 sends the amplified multiplexed optical signal 261 over an optical fiber. For example, where the transmitter 200 is disposed in an OLT, the amplified multiplexed optical signal 261 is propagated over an optical fiber toward a set of ONUs. For example, where the transmitter 200 is disposed in an ONU, the amplified multiplexed optical signal 261 is propagated over an optical fiber toward an OLT.

FIG. 3 depicts an example embodiment of a dual-wavelength dual-polarization transmitter for use by an OLT for downstream transmission or for use by an ONU for upstream transmission

As illustrated in FIG. 3, the transmitter 300 includes a pair of lasers 310-1 and 310-2 (collectively, lasers 310), a pair of splitters 320-1 and 320-2 (collectively, splitters 320), a set of four polarization data modulators 330-1 - 330-4 (collectively, polarization data modulators 330), a pair of wavelength multiplexers 340-1 and 340-2 (collectively, wavelength multiplexers 340), a polarization beam combiner 350, and an optical amplifier 360. In the transmitter 300, the laser 310-1, the splitter 320-1, the polarization data modulators 330-1 and 330-2, and the wavelength multiplexer 340-1 may be considered to constitute a first branch of the transmitter 300 that is configured to generate two optical channels based on a first polarization P1 and the pair of wavelengths λ1 and λ2 and, similarly, the laser 310-2, the splitter 320-2, the polarization data modulators 330-3 and 330-4, and the wavelength multiplexer 340-2 may be considered to constitute a second branch of the transmitter 300 that is configured to generate two optical channels based on a second polarization and the pair of wavelengths λ1 and λ2. The two branches of the transmitter 300 feed into the polarization beam combiner 350 for combining of the pairs of optical channels to form a combined optical signal that is then amplified by the optical amplifier 360 before being transmitted on the optical fiber.

In the first branch of the transmitter 300, the two optical channels based on the first wavelength λ1 and dual polarizations may be generated and transmitted as follows. The laser 310-1 generates a first optical signal 311-1 at the first wavelength λ1 and provides the first optical signal 311-1 to an input of the optical splitter 320-1. The optical splitter 320-1 splits the first optical signal 311-1 into a first optical signal copy 321-1-1 which is provided to an input of the polarization data modulator 330-1 and a second optical signal copy 321-1-2 which is provided to an input of the polarization data modulator 330-2. The polarization data modulator 330-1 modulates the first optical signal copy 321-1-1 with data for the first polarization P1 to provide a first optical channel 331-1 based on the first wavelength λ1 and the first polarization P1, and provides the first optical channel 331-1 to a first input to the wavelength multiplexer 340-1. The polarization data modulator 330-2 modulates the second optical signal copy 321-1-2 with data for a second polarization P2 to provide a second optical channel 331-2 based on the first wavelength λ1 and the second polarization P2, and provides the second optical channel 331-2 to a first input to the wavelength multiplexer 340-2.

In the second branch of the transmitter 300, the two optical channels based on the second wavelength λ2 and dual polarizations may be generated and transmitted as follows. The laser 310-2 generates a second optical signal 311-2 at the second wavelength λ2 and provides the second optical signal 311-2 to an input of the optical splitter 320-2. The optical splitter 320-2 splits the second optical signal 311-2 into a first optical signal copy 321-2-1 which is provided to an input of the polarization data modulator 330-3 and a second optical signal copy 321-2-2 which is provided to an input of the polarization data modulator 330-4. The polarization data modulator 330-3 modulates the first optical signal copy 321-1-1 with data for the first polarization P1 to provide a third optical channel 331-3 based on the second wavelength λ2 and the first polarization P1, and provides the third optical channel 331-3 to a second input to the wavelength multiplexer 340-1. The polarization data modulator 330-4 modulates the second optical signal copy 321-1-2 with data for the second polarization P2 to provide a fourth optical channel 331-4 based on the second wavelength λ1 and the second polarization P2, and provides the fourth optical channel 331-4 to a second input to the wavelength multiplexer 340-2.

In the transmitter 300, the wavelength multiplexers 340 multiplex the optical channels based on wavelength multiplexing to form respective pairs of optical channels 341. The wavelength multiplexer 340-1 receives the optical channels with the first polarization P1 (namely, the first optical channel 331-1 based on the first wavelength λ1 and the first polarization P1 and the third optical channel 331-3 based on the second wavelength λ2 and the first polarization P1) and combines the first optical channel 331-1 and the third optical channel 331-2, based on wavelength multiplexing of the first wavelength λ1 and the second wavelength λ2, to provide a first pair of optical channels 341-1 based on the first polarization P1 and the pair of wavelengths λ1 and λ2. The wavelength multiplexer 340-1 provides the first pair of optical channels 341-1 to an input of the polarization beam combiner 350 for combining with the other two optical channels from the second branch of the transmitter 300 before amplification and transmission on an optical fiber.

In the transmitter 300, the wavelength multiplexers 340 multiplex the optical channels based on wavelength multiplexing to form respective pairs of optical channels 341. The wavelength multiplexer 340-2 receives the optical channels with the second polarization P2 (namely, the second optical channel 331-2 based on the first wavelength λ1 and the second polarization P2 and the fourth optical channel 331-4 based on the second wavelength λ2 and the second polarization P2) and combines the second optical channel 331-2 and the fourth optical channel 331-4, based on wavelength multiplexing of the first wavelength λ1 and the second wavelength λ2, to provide a second pair of optical channels 341-2 based on the second polarization P2 and the pair of wavelengths λ1 and λ2. The wavelength multiplexer 340-2 provides the second pair of optical channels 341-2 to an input of the polarization beam combiner 350 for combining with the other two optical channels from the first branch of the transmitter 300 before amplification and transmission on an optical fiber.

In the transmitter 300, the polarization beam combiner 350 receives the first pair of optical channels 341-1 based on the first polarization P1 and the pair of wavelengths λ1 and λ2 from the first wavelength multiplexer 340-1 associated with the first branch of the transmitter 300, receives the second pair of optical channels 341-2 based on the second polarization P2 and the pair of wavelengths λ1 and λ2 from the second wavelength multiplexer 340-2 associated with the second branch of the transmitter 300, and combines the first pair of optical channels 341-1 and the second pair of optical channels 341-2 to form a combined optical signal 351 that includes each of the four optical channels 341. The polarization beam combiner 350 provides the multiplexed optical signal 351 to an input to the optical amplifier 360. The optical amplifier 360 amplifies the combined optical signal 351 to provide an amplified combined optical signal 361. The transmitter 300 sends the amplified combined optical signal 361 over an optical fiber. For example, where the transmitter 300 is disposed in an OLT, the amplified combined optical signal 361 is propagated over an optical fiber toward a set of ONUs. For example, where the transmitter 300 is disposed in an ONU, the amplified combined optical signal 361 is propagated over an optical fiber toward an OLT.

FIG. 4 depicts an example embodiment of a single-wavelength dual-polarization transmitter for use by an OLT for downstream transmission or for use by an ONU for upstream transmission.

As illustrated in FIG. 4, the transmitter 400 is similar to either branch of the transmitter 200 of FIG. 2, including the same components arranged in the same configuration. Namely, the transmitter 400 includes a laser 410, a splitter 420, a pair of polarization data modulators 430-1 - 430-2 (collectively, polarization data modulators 430), a polarization beam combiner 440, and an optical amplifier 460. The transmitter 400 is configured to generate two optical channels based on a wavelength λ1 and dual polarizations. The polarization beam combiner 440 combines the two optical channels to form a combined optical signal that is then amplified by the optical amplifier 260 before being transmitted on the optical fiber.

In the transmitter 400, the two optical channels based on the first wavelength λ1 and dual polarizations may be generated and transmitted as follows. The laser 410 generates an optical signal 411 at the first wavelength λ1 and provides the optical signal 411 to an input of the optical splitter 420. The optical splitter 420 splits the optical signal 411 into a first optical signal copy 421-1 which is provided to a first input of the polarization data modulator 430-1 and a second optical signal copy 421-2 which is provided to a second input of the polarization data modulator 430-2. The polarization data modulator 230-1 modulates the first optical signal copy 421-1 with data for a first polarization P1 to provide a first optical channel 431-1 based on the first wavelength λ1 and the first polarization P1, and provides the first optical channel 431-1 to a first input to the polarization beam combiner 440. The polarization data modulator 430-2 modulates the second optical signal copy 421-2 with data for a second polarization P2 to provide a second optical channel 431-2 based on the first wavelength λ1 and the second polarization P2, and provides the second optical channel 431-2 to a second input to the polarization beam combiner 440. The polarization beam combiner 440 receives the first optical channel 431-1 and the second optical channel 431-2 and combines the first optical channel 431-1 and the second optical channel 431-2, based on polarization multiplexing of the first polarization P1 and the second polarization P2, to provide a combined optical signal 441 including the pair of optical channels 431 based on the wavelength λ1 and dual polarizations. The polarization beam combiner 440 provides the combined optical signal 441 to the optical amplifier 460 for amplification of the optical signal before transmission on the optical fiber. The optical amplifier 460 amplifies the combined optical signal 441 to provide an amplified combined optical signal 461. The transmitter 400 sends the amplified combined optical signal 461 over an optical fiber. For example, where the transmitter 400 is disposed in an OLT, the amplified combined optical signal 461 is propagated over an optical fiber toward a set of ONUs. For example, where the transmitter 400 is disposed in an ONU, the amplified combined optical signal 461 is propagated over an optical fiber toward an OLT.

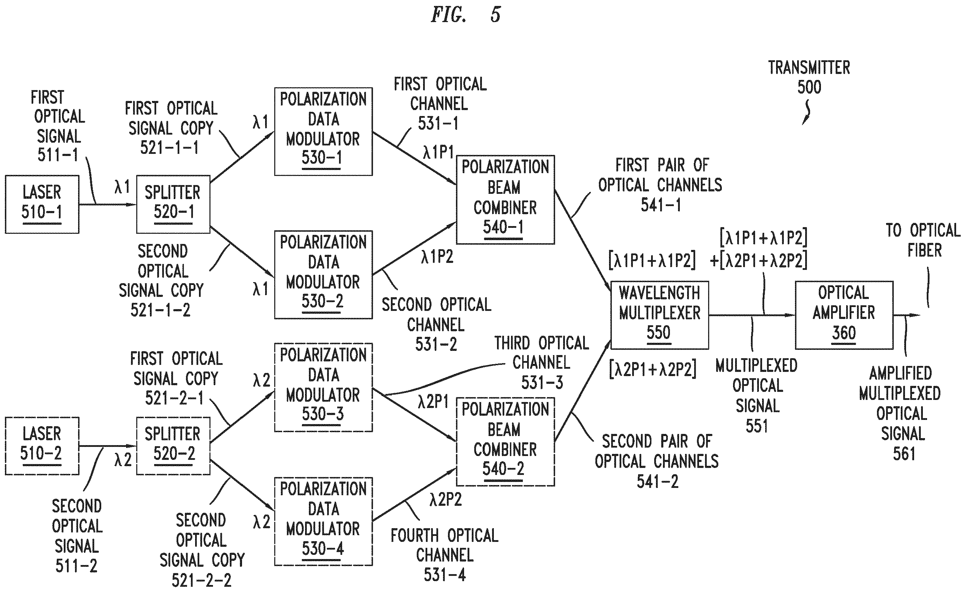

FIG. 5 depicts an example embodiment of a flexible-wavelength dual-polarization transmitter for use by an OLT for downstream transmission or for use by an ONU for upstream transmission.

As illustrated in FIG. 5, the transmitter 500 is similar to the transmitter 200 of FIG. 2, including the same components arranged in the same configuration. Namely, the transmitter 500 includes a pair of lasers 510-1 and 510-2 (collectively, lasers 510), a pair of splitters 520-1 and 520-2 (collectively, splitters 520), a set of four polarization data modulators 530-1 - 530-4 (collectively, polarization data modulators 530), a pair of polarization beam combiners 540-1 and 540-2 (collectively, polarization beam combiners 540), a wavelength division multiplexer 550, and an optical amplifier 560. In the transmitter 500, the laser 510-1, the splitter 520-1, the polarization data modulators 530-1 and 530-2, the polarization beam combiner 540-1, the wavelength division multiplexer 550, and the optical amplifier 560 may be considered to constitute a first branch of the transmitter 500 that is configured to generate and transmit two optical channels based on a first wavelength λ1 and dual polarizations and, similarly, the laser 510-2, the splitter 520-2, the polarization data modulators 530-3 and 530-4, the polarization beam combiner 540-2, the wavelength division multiplexer 550, and the optical amplifier 560 may be considered to constitute a second branch of the transmitter 500 that is configured to generate and transmit two optical channels based on a second wavelength λ2 and dual polarizations.

The transmitter 500 is configured to use the first branch of the transmitter 500 for communication and to support dynamic activation and deactivation of use of the second branch of the transmitter 500 for communication. For example, at times when higher data rates are not needed, the first branch of the transmitter 500 may be used to support communications of the transmitter 500 (using two optical channels) and the second branch of the transmitter 500 may remain deactivated to save power consumed by the transmitter 500. For example, at times when higher data rates are needed at the transmitter 500, the second branch of the transmitter 500 may be activated such that the first and second branches of the transmitter 500 are both used to support communications of the transmitter 500 (using four optical channels), thereby doubling the data rate supported by the transmitter 500. As illustrated in FIG. 5, the elements of the second branch of the transmitter 500 which may be dynamically activated and deactivated include the laser 510-2, the optical splitter 520-2, the polarization data modulators 530-3 and 530-4, and the polarization beam combiner 540-2, which provides significant flexibility in terms of balancing the need to temporarily support higher data rates while also enabling conservation of power (and component life from running the components less often).

In the first branch of the transmitter 500, the two optical channels based on the first wavelength λ1 and dual polarizations may be generated and transmitted as follows. The laser 510-1 generates a first optical signal 511-1 at the first wavelength λ1 and provides the first optical signal 511-1 to an input of the optical splitter 520-1. The optical splitter 520-1 splits the first optical signal 511-1 into a first optical signal copy 521-1-1 which is provided to an input of the polarization data modulator 530-1 and a second optical signal copy 521-1-2 which is provided to an input of the polarization data modulator 530-2. The polarization data modulator 530-1 modulates the first optical signal copy 521-1-1 with data for a first polarization P1 to provide a first optical channel 531-1 based on the first wavelength λ1 and the first polarization P1, and provides the first optical channel 531-1 to a first input to the polarization beam combiner 540-1. The polarization data modulator 530-2 modulates the second optical signal copy 521-1-2 with data for a second polarization P2 to provide a second optical channel 531-2 based on the first wavelength λ1 and the second polarization P2, and provides the second optical channel 531-2 to a second input to the polarization beam combiner 540-1. The polarization mean combiner 540-1 receives the first optical channel 531-1 and the second optical channel 531-2 and combines the first optical channel 531-1 and the second optical channel 531-2, based on polarization multiplexing of the first polarization P1 and the second polarization P2, to provide a first pair of optical channels 541-1 based on the first wavelength λ1 and dual polarizations. The polarization beam combiner 540-1 provides the first pair of optical channels 541-1 to an input of the wavelength division multiplexer 550 for multiplexing with the other two optical channels from the second branch of the transmitter 500, when the second branch of the transmitter 500 is active, before amplification and transmission on the optical fiber.

In the second branch of the transmitter 500, when the second branch of the transmitter 500 is active, the two optical channels based on the second wavelength λ2 and dual polarizations may be generated and transmitted as follows. The laser 510-2 generates a second optical signal 511-2 at the second wavelength λ2 and provides the second optical signal 511-2 to an input of the optical splitter 520-2. The optical splitter 520-2 splits the first optical signal 511-2 into a first optical signal copy 521-2-1 which is provided to an input of the polarization data modulator 530-3 and a second optical signal copy 521-2-2 which is provided to an input of the polarization data modulator 530-4. The polarization data modulator 530-3 modulates the first optical signal copy 521-2-1 with data for a first polarization P1 to provide a third optical channel 531-3 based on the second wavelength λ2 and the first polarization P1, and provides the third optical channel 531-3 to a first input to the polarization beam combiner 540-2. The polarization data modulator 530-4 modulates the second optical signal copy 521-2-2 with data for a second polarization P2 to provide a fourth optical channel 531-4 based on the second wavelength λ2 and the second polarization P2, and provides the fourth optical channel 531-4 to a second input to the polarization beam combiner 540-2. The polarization beam combiner 540-2 receives the third optical channel 531-3 and the fourth optical channel 531-4 and combines the third optical channel 531-3 and the fourth optical channel 531-4, based on polarization multiplexing of the first polarization P1 and the second polarization P2, to provide a second pair of optical channels 541-2 based on the second wavelength λ2 and dual polarizations. The polarization beam combiner 540-2 provides the second pair of optical channels 541-2 to an input of the wavelength division multiplexer 550 for multiplexing with the other two optical channels from the first branch of the transmitter 500 before amplification and transmission on the optical fiber. It is noted that the controller that is configured to dynamically activate and deactivate the second branch of the transmitter may be a controller for a tunable laser (e.g., a controller for the laser 510-2).

In the transmitter 500, as indicated above, the amplified multiplexed optical signal 561 provided by the optical amplifier depends on whether the second branch of the transmitter 500 is deactivated or activated. In the transmitter 500, when the second branch of the transmitter 500 is deactivated, the wavelength division multiplexer 550 receives the first pair of optical channels 541-1 based on the first wavelength λ1 and the dual polarizations from the first branch of the transmitter 500 and passes the first pair of optical channels 541-1 to the optical amplifier 560 as the multiplexed optical signal 551, and the optical amplifier 560 amplifies the multiplexed optical signal 551 to provide an amplified multiplexed optical signal 561 that includes the first pair of optical channels 541-1. In the transmitter 500, when the second branch of the transmitter 500 is activated, the wavelength division multiplexer 550 receives the first pair of optical channels 541-1 based on the first wavelength λ1 and the dual polarizations from the first branch of the transmitter 500, receives the second pair of optical channels 541-2 based on the second wavelength λ2 and the dual polarizations from the second branch of the transmitter 500, multiplexes the first pair of optical channels 541-1 and the second pair of optical channels 541-2 based on wavelength multiplexing to form a multiplexed optical signal 551 that includes each of the four optical channels 241, and provides the multiplexed optical signal 551 to an input to the optical amplifier 260, and the optical amplifier 560 amplifies the multiplexed optical signal 551 to provide an amplified multiplexed optical signal 561. The transmitter 500 sends the amplified multiplexed optical signal 561 over an optical fiber. For example, where the transmitter 500 is disposed in an OLT, the amplified multiplexed optical signal 561 is propagated over an optical fiber toward a set of ONUs. For example, where the transmitter 500 is disposed in an ONU, the amplified multiplexed optical signal 561 is propagated over an optical fiber toward an OLT.

FIG. 6 depicts an example embodiment of a dual-wavelength dual-polarization receiver for use by an ONU for downstream reception or for use by an OLT for upstream reception.

As illustrated in FIG. 6, the receiver 600 includes an optical amplifier 610, a polarization beam splitter 620, a pair of wavelength demultiplexers 630-1 and 630-2 (collectively, wavelength demultiplexers 630), and a set of optical detectors 640-1 - 640-4 (collectively, optical detectors 640). The optical detectors 640 may be implemented as PIN photodiode (PIN) / transimpedance amplifier (TIA) optical detectors or using any other suitable detectors.

In the receiver 600, the optical amplifier 610 receives a multiplexed optical signal 601 via an optical fiber. For example, where the receiver 600 is disposed in an ONU, the multiplexed optical signal 601 is propagated over an optical fiber from an OLT. For example, where the receiver 600 is disposed in an OLT, the multiplexed optical signal 601 is received over an optical fiber from an ONU. The multiplexed optical signal includes a set of four optical channels that have been transmitted based on application of dual polarization (P1 and P2) to each wavelength in a pair of wavelengths (λ1 and λ2) and, as discussed further below, each of the four optical channels is recovered by the receiver 600.

In the receiver 600, the optical amplifier 610 amplifies the multiplexed optical signal 601 to form an amplified multiplexed optical signal 611 and provides the amplified multiplexed optical signal 611 to an input of the polarization beam splitter 620. The polarization beam splitter 620 splits the two polarizations (P1 and P2) to recover a first pair of optical channels 621-1 that includes two optical channels based on polarization P1 (namely, one based on the first wavelength λ1 and the first polarization P1 and another based on the second wavelength λ2 and the first polarization P1) and to recover a second pair of optical channels 621-2 that includes two optical channels based on polarization P2 (namely, one based on the first wavelength λ1 and the second polarization P2 and another based on the second wavelength λ2 and the second polarization P2).

In the receiver 600, the polarization beam splitter 620 provides the first pair of optical channels 621-1 (including the two optical channels that are based on polarization P1) to the wavelength demultiplexer 630-1. The wavelength demultiplexer 630-1 receives the first pair of optical channels 621-1 and, based on wavelength demultiplexing, separates the first pair of optical channels 621-1 into a first optical channel 631-1 based on the first wavelength λ1 and the first polarization P1 and a second optical channel 632-2 based on the second wavelength λ2 and the first polarization P1. The wavelength demultiplexer 630-1 provides the first optical channel 631-1 to the optical detector 640-1, which outputs a corresponding output signal 641-1 from the first optical channel 631-1. The wavelength demultiplexer 630-1 provides the second optical channel 631-2 to the optical detector 640-2, which outputs a corresponding output signal 641-2 from the second optical channel 631-2. In this manner, the polarization beam splitter 620, the wavelength demultiplexer 630-1, and the optical detectors 640-1 and 640-2 may be considered to constitute a first branch of the receiver 600 that is configured to recover the pair of optical channels that are based on application of the first polarization P1 to each of the two wavelengths λ1 and λ2.

In the receiver 600, the polarization beam splitter 620 provides the second pair of optical channels 621-2 (including the two optical channels that are based on polarization P2) to the wavelength demultiplexer 630-2. The wavelength demultiplexer 630-2 receives the second pair of optical channels 621-2 and, based on wavelength demultiplexing, separates the second pair of optical channels 621-2 into a third optical channel 631-3 based on the first wavelength λ1 and the second polarization P2 and a fourth optical channel 632-4 based on the second wavelength λ2 and the second polarization P2. The wavelength demultiplexer 630-2 provides the third optical channel 631-3 to the optical detector 640-3, which outputs a corresponding output signal 641-3 from the third optical channel 631-3. The wavelength demultiplexer 630-2 provides the fourth optical channel 631-4 to the optical detector 640-4, which outputs a corresponding output signal 641-4 from the fourth optical channel 631-4. In this manner, the polarization beam splitter 620, the wavelength demultiplexer 630-2, and the optical detectors 640-3 and 640-4 may be considered to constitute a second branch of the receiver 600 that is configured to recover the pair of optical channels that are based on application of the first polarization P2 to each of the two wavelengths λ1 and λ2.

FIG. 7 depicts an example embodiment of a single-wavelength dual-polarization receiver for use by an ONU for downstream reception or for use by an OLT for upstream reception.

As illustrated in FIG. 7, the receiver 700 includes an optical amplifier 710, a wavelength demultiplexer 720, a polarization beam splitter 730, and a set of optical detectors 740-1 - 740-2 (collectively, optical detectors 740). The optical detectors 740 may be implemented as PIN/TIA optical detectors or using any other suitable detectors.

In the receiver 700, the optical amplifier 710 receives a multiplexed optical signal 701 via an optical fiber. For example, where the receiver 700 is disposed in an ONU, the multiplexed optical signal 701 is propagated over an optical fiber from an OLT. For example, where the receiver 700 is disposed in an OLT, the multiplexed optical signal 701 is received over an optical fiber from an ONU. The multiplexed optical signal 701 includes a set of four optical channels that have been transmitted based on application of dual polarization (P1 and P2) to each wavelength in a pair of wavelengths (λ1 and λ2) and, as discussed further below, two of the four optical channels are recovered by the receiver 700.

In the receiver 700, the optical amplifier 710 amplifies the multiplexed optical signal 701 to form an amplified multiplexed optical signal 711 and provides the amplified multiplexed optical signal 711 to an input of the wavelength demultiplexer 720. The wavelength demultiplexer 720 demultiplexes the amplified multiplexed optical signal 711 into a first pair of optical channels based on the first wavelength λ1 and a second pair of optical channels based on the second wavelength λ2. The receiver 700 only includes two optical detectors 740 and, thus, is only configured to recover two of the four optical channels within the multiplexed optical signal 701. So, the receiver 700 ignores one of the pairs of optical channels and provides the other of the pairs of optical channels to the polarization beam splitter 730. In the example of FIG. 7, it is assumed that the first pair of optical channels 721 based on the first wavelength λ1 is passed to the polarization beam splitter 730 and the second pair of optical channels based on the second wavelength λ2 is ignored.

In the receiver 700, the polarization beam splitter 730 receives the first pair of optical channels 721 based on the first wavelength λ1, which includes both polarizations (P1 and P2), and splits the two polarizations (P1 and P2) to recover a first optical channel 731-1 based on the first wavelength λ1 and the first polarization P1 and a second optical channel 731-2 based on the first wavelength λ1 and the second polarization P2. The polarization beam splitter 730 provides the first optical channel 731-1 to the optical detector 740-1, which outputs a corresponding output signal 741-1 from the first optical channel 731-1. The polarization beam splitter 730 provides the second optical channel 731-2 to the optical detector 740-2, which outputs a corresponding output signal 741-2 from the second optical channel 731-2.

In this manner, even though the multiplexed optical signal 701 includes a set of four optical channels, the receiver 700 is implemented as a simpler, lower-cost receiver that is still able to recover two of the four optical channels transmitted by the associated transmitter.

FIG. 8 depicts an example embodiment of a single-wavelength single-polarization receiver for use by an ONU for downstream reception or for use by an OLT for upstream reception.

As illustrated in FIG. 8, the receiver 800 includes an optical amplifier 810, a tunable wavelength filter 820, a polarization beam splitter 830, and an optical detector 840. The optical detector 840 may be implemented as a PIN/TIA optical detector or using any other suitable detector.

In the receiver 800, the optical amplifier 810 receives a multiplexed optical signal 801 via an optical fiber. For example, where the receiver 800 is disposed in an ONU, the multiplexed optical signal 801 is propagated over an optical fiber from an OLT. For example, where the receiver 800 is disposed in an OLT, the multiplexed optical signal 801 is received over an optical fiber from an ONU. The multiplexed optical signal 801 includes a set of four optical channels that have been transmitted based on application of dual polarization (P1 and P2) to each wavelength in a pair of wavelengths (λ1 and λ2) and, as discussed further below, one of the four optical channels is recovered by the receiver 800.

In the receiver 800, the optical amplifier 810 amplifies the multiplexed optical signal 801 to form an amplified multiplexed optical signal 811 and provides the amplified multiplexed optical signal 811 to an input of the wavelength filter 820. The receiver 800 only includes one optical detector 840 and, thus, is only configured to recover one of the four optical channels within the multiplexed optical signal 801. So, the receiver 800 filters one of the pairs of optical channels and provides the other of the pairs of optical channels to the polarization beam splitter 830. In the example of FIG. 8, it is assumed that the first pair of optical channels 821 based on the first wavelength λ1 is passed to the polarization beam splitter 830 and the second pair of optical channels based on the second wavelength λ2 is filtered by the wavelength filter 820.

In the receiver 800, the polarization beam splitter 830 receives the first pair of optical channels 821 based on the first wavelength λ1, which includes both polarizations (P1 and P2), and filters one of the optical channels based on one of the polarizations and provides the other of the optical channels based on the other of the polarizations to the optical detector 840 as optical channel 831. In the example of FIG. 8, it is assumed that the wireless channel based on the first polarization P1 is passed to the detector 840 as optical channel 831, while the wireless channel based on the second polarization P2 is filtered by the polarization beam splitter 830. The polarization beam splitter 830 provides the optical channel 831 to the optical detector 840, which outputs a corresponding output signal 841 from the optical channel 831.

In this manner, even though the multiplexed optical signal 801 includes a set of four optical channels, the receiver 800 is implemented as a simpler, lower-cost receiver that is still able to recover one of the four optical channels transmitted by the associated transmitter.

FIG. 9 depicts an example embodiment of a single-wavelength single-polarization receiver for use by an ONU for downstream reception or for use by an OLT for upstream reception.

As illustrated in FIG. 9, the receiver 900 includes an optical amplifier 910, a wavelength demultiplexer 920, a polarization beam splitter 930, and an optical detector 940. The optical detector 940 may be implemented as a PIN/TIA optical detector or using any other suitable detector.

In the receiver 900, the optical amplifier 910 receives a multiplexed optical signal 901 via an optical fiber. For example, where the receiver 900 is disposed in an ONU, the multiplexed optical signal 901 is propagated over an optical fiber from an OLT. For example, where the receiver 900 is disposed in an OLT, the multiplexed optical signal 901 is received over an optical fiber from an ONU. The multiplexed optical signal 901 includes a set of four optical channels that have been transmitted based on application of dual polarization (P1 and P2) to each wavelength in a pair of wavelengths (λ1 and λ2) and, as discussed further below, one of the four optical channels is recovered by the receiver 900.

In the receiver 900, the optical amplifier 910 amplifies the multiplexed optical signal 901 to form an amplified multiplexed optical signal 911 and provides the amplified multiplexed optical signal 911 to an input of the wavelength filter 920. The receiver 900 only includes one optical detector 940 and, thus, is only configured to recover one of the four optical channels within the multiplexed optical signal 901. So, the receiver 900 drops one of the pairs of optical channels and provides the other of the pairs of optical channels to the polarization beam splitter 930. In the example of FIG. 9, it is assumed that the first pair of optical channels 921 based on the first wavelength λ1 is passed to the polarization beam splitter 930 and the second pair of optical channels based on the second wavelength λ2 is dropped by the wavelength demultiplexer 920.

In the receiver 900, the polarization beam splitter 930 receives the first pair of optical channels 921 based on the first wavelength λ1, which includes both polarizations (P 1 and P2), and filters one of the optical channels based on one of the polarizations and provides the other of the optical channels based on the other of the polarizations to the optical detector 940 as optical channel 931. In the example of FIG. 9, it is assumed that the wireless channel based on the first polarization P1 is passed to the detector 940 as optical channel 931, while the wireless channel based on the second polarization P2 is filtered by the polarization beam splitter 930. The polarization beam splitter 930 provides the optical channel 931 to the optical detector 940, which outputs a corresponding output signal 941 from the optical channel 931.

In this manner, even though the multiplexed optical signal 901 includes a set of four optical channels, the receiver 900 is implemented as a simpler, lower-cost receiver that is still able to recover one of the four optical channels transmitted by the associated transmitter.

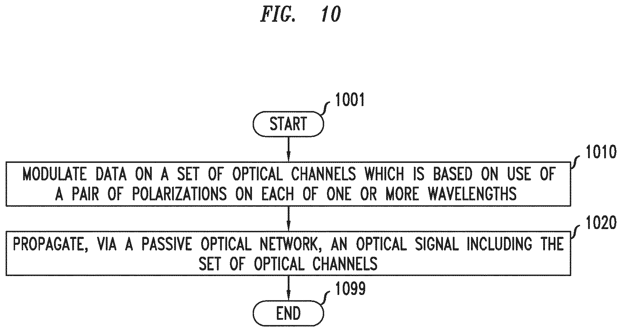

FIG. 10 depicts an example embodiment of a method for use by a transmitter, of an OLT or an ONU, for supporting dual-polarization communications. It will be appreciated that, although primarily presented as being performed serially, at least a portion of the functions of the method 1000 may be performed contemporaneously or in a different order than as presented with respect to FIG. 10. At block 1001, method 1000 begins. At block 1010, modulate data on a set of optical channels which is based on use of a pair of polarizations on each of one or more wavelengths. At block 1020, propagate, via a passive optical network, an optical signal including the set of optical channels. At block 1099, the method 1000 ends.

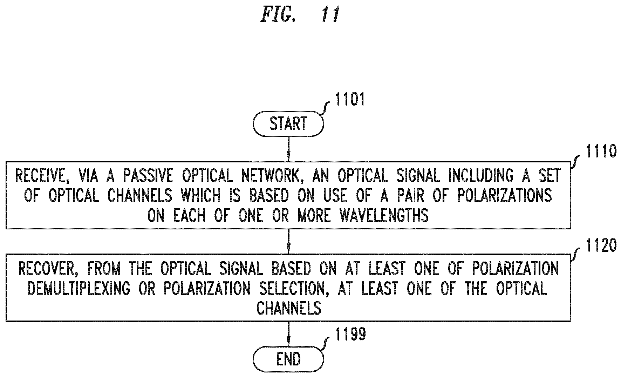

FIG. 11 depicts an example embodiment of a method for use by a receiver, of an ONU or an OLT, for supporting dual-polarization communications. It will be appreciated that, although primarily presented as being performed serially, at least a portion of the functions of the method 1100 may be performed contemporaneously or in a different order than as presented with respect to FIG. 11. At block 1101, method 1100 begins. At block 1110, receive, via a passive optical network, an optical signal including a set of optical channels which is based on use of a pair of polarizations on each of one or more wavelengths. At block 1120, recover, from the optical signal based on at least one of polarization demultiplexing or polarization selection, at least one of the optical channels from the set of optical channels. At block 1199, the method 1100 ends.

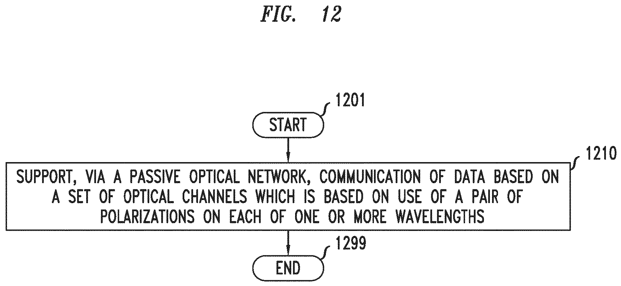

FIG. 12 depicts an example embodiment of a method for use by an OLT or an ONU for supporting dual-polarization communications using one or more wavelengths. It will be appreciated that, although primarily presented as being performed serially, at least a portion of the functions of the method 1200 may be performed contemporaneously or in a different order than as presented with respect to FIG. 12. At block 1201, method 1200 begins. At block 1210, support, via a passive optical network, communication of data based on a set of optical channels which is based on use of a pair of polarizations on each of one or more wavelengths. At block 1299, the method 1200 ends.

Various example embodiments for supporting dual-polarization communications within a direct detection based PON may provide various advantages or potential advantages. For example, various example embodiments for supporting dual-polarization communications within a direct detection based PON may be configured to support increased data rates based on application of the dual polarizations to each of one or more wavelengths to support increased numbers of optical channels within the direct detection based PON. For example, various example embodiments for supporting dual-polarization communications within a direct detection based PON may be configured to support increased data rates within the direct detection based PON while still maintaining support for legacy devices within the PON (such that the benefits of dual-polarization communications within a direct detection based PON may be realized between various combinations of OLTs and ONUs without requiring all device of the PON to be upgraded in order for dual-polarization communications to be used). It will be appreciated that various example embodiments for supporting dual-polarization communications within a direct detection based PON may be configured to provide various other advantages or potential advantages.

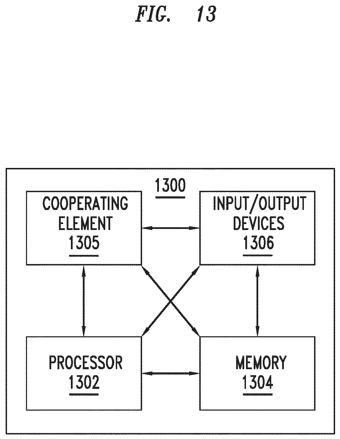

FIG. 13 depicts an example embodiment of a computer suitable for use in performing various functions presented herein.

The computer 1300 includes a processor 1302 (e.g., a central processing unit (CPU), a processor having a set of processor cores, a processor core of a processor, or the like) and a memory 1304 (e.g., a random access memory (RAM), a read-only memory (ROM), or the like). In at least some example embodiments, the computer 1300 may include at least one processor and at least one memory storing instructions that, when executed by the at least one processor, cause the computer 1300 to perform various functions presented herein.

The computer 1300 also may include a cooperating element 1305. The cooperating element 1305 may be a hardware device. The cooperating element 1305 may be a process that can be loaded into the memory 1304 and executed by the processor 1302 to implement various functions presented herein (in which case, for example, the cooperating element 1305 (including associated data structures) can be stored on a non-transitory computer readable medium, such as a storage device or other suitable type of storage element (e.g., a magnetic drive, an optical drive, or the like)).

The computer 1300 also may include one or more input/output devices 1306. The input/output devices 1306 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1300 may represent a general architecture and functionality suitable for implementing functional elements described herein, portions of functional elements described herein, or the like, as well as various combinations thereof. For example, the computer 1300 may provide a general architecture and functionality that is suitable for implementing one or more elements presented herein. For example, the computer 1300 may provide a general architecture and functionality that is suitable for implementing at least one of an OLT or a portion thereof, an ONU or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
a transmitter configured to:
modulate data on a set of optical channels which is based on use of a pair of polarizations on each of one or more wavelengths; and
propagate, via a passive optical network, an optical signal including the set of optical channels.

2. The apparatus according to claim 1, wherein the transmitter is configured to:
modulate data on a first optical channel of the set of optical channels which is based on use of a first polarization of the pair of polarizations on a first wavelength of the one or more wavelengths;
modulate data on a second optical channel of the set of optical channels which is based on use of a second polarization of the pair of polarizations on the first wavelength of the one or more wavelengths; and
multiplex the first optical channel and the second optical channel to form the set of optical channels.

3. The apparatus according to any of claims 1 to 2, wherein the transmitter includes:
a laser configured to generate the first wavelength of the one or more wavelengths;
a first modulator configured to modulate data on a first optical channel of the set of optical channels which is based on use of a first polarization of the pair of polarizations on a first wavelength of the one or more wavelengths;
a second modulator configured to modulate data on a second optical channel of the set of optical channels which is based on use of a second polarization of the pair of polarizations on the first wavelength of the one or more wavelengths; and
a polarization beam combiner configured to combine the first optical channel and the second optical channel to form the optical signal including the set of optical channels.

4. The apparatus according to any of claims 1 to 3, wherein the transmitter is configured to:
modulate data onto a first pair of optical channels which is based on use of the pair of polarizations on a first wavelength of the one or more wavelengths;
modulate data onto a second pair of optical channels which is based on use of the pair of polarizations on a second wavelength of the one or more wavelengths; and
multiplex the first pair of optical channels and the second pair of optical channels to form the set of optical channels.

5. The apparatus according to any of claims 1 to 4, wherein the transmitter includes:
a first laser configured to generate a first wavelength of the one or more wavelengths;
a second laser configured to generate a second wavelength of the one or more wavelengths;
a first pair of modulators configured to modulate data onto a first set of two optical channels which are based on use of the pair of polarizations on the first wavelength, wherein the first set of two optical channels includes a first optical channel based on the first wavelength and a first polarization and a second optical channel based on the first wavelength and a second polarization;
a second pair of modulators configured to modulate data onto a second set of two optical channels which is based on use of the pair of polarizations on the second wavelength, wherein the second set of two optical channels includes a third optical channel based on the second wavelength and the first polarization and a fourth optical channel based on the second wavelength and the second polarization;
a first polarization beam combiner configured to combine the first optical channel and the second optical channel to form a first pair of optical channels based on the first wavelength;
a second polarization beam combiner configured to combine the third optical channel and the fourth optical channel to form a second pair of optical channels based on the second wavelength; and
a wavelength division multiplexer configured to multiplex the first pair of optical channels based on the first wavelength and the second pair of optical channels based on the second wavelength to form the optical signal including the set of optical channels.

6. The apparatus according to any of claims 1 to 5, wherein the transmitter includes:
a first laser configured to generate a first wavelength of the one or more wavelengths;
a second laser configured to generate a second wavelength of the one or more wavelengths;
a first pair of modulators configured to modulate data onto a first set of two optical channels which are based on use of the pair of polarizations on the first wavelength, wherein the first set of two optical channels includes a first optical channel based on the first wavelength and a first polarization and a second optical channel based on the first wavelength and a second polarization;
a second pair of modulators configured to modulate data onto a second set of two optical channels which is based on use of the pair of polarizations on the second wavelength, wherein the second set of two optical channels includes a third optical channel based on the second wavelength and the first polarization and a fourth optical channel based on the second wavelength and the second polarization;
a first wavelength division multiplexer configured to combine the first optical channel and the third optical channel to form a first pair of optical channels based on the first polarization;
a second wavelength division multiplexer configured to combine the second optical channel and the fourth optical channel to form a second pair of optical channels based on the second polarization; and
a polarization beam combiner configured to combine the first pair of optical channels based on the first polarization and the second pair of optical channels based on the second polarization to form the optical signal including the set of optical channels.

7. The apparatus according to any of claims 1 to 6, wherein the transmitter includes:
a first optical channel generator configured to generate a first pair of optical channels based on modulation of data onto the pair of polarizations on a first wavelength of the one or more wavelengths;
a second optical channel generator configured to generate a second pair of optical channels based on modulation of data onto the pair of polarizations on a second wavelength of the one or more wavelengths; and
a controller configured to dynamically activate and deactivate the second optical channel generator for controlling generation of the second pair of optical channels.

8. The apparatus according to any of claims 1 to 7, wherein the apparatus comprises an optical line terminal, OLT, configured to be deployed in the passive optical network.

9. The apparatus according to any of claims 1 to 7, wherein the apparatus comprises an optical network unit, ONU, configured to be deployed in the passive optical network.

10. A method, comprising:
modulating data on a set of optical channels which is based on use of a pair of polarizations on each of one or more wavelengths; and
propagating, via a passive optical network, an optical signal including the set of optical channels.

11. An apparatus, comprising:
a receiver configured to:
receive, via a passive optical network, an optical signal including a set of optical channels which is based on use of a pair of polarizations on each of one or more wavelengths; and
recover, from the optical signal based on at least one of polarization demultiplexing or polarization selection, at least one of the optical channels from the set of optical channels.

12. The apparatus according to claim 11, wherein the receiver includes:
a wavelength demultiplexer configured to receive the optical signal and demultiplex the optical signal into a first multiplexed optical signal based on a first wavelength of the one or more wavelengths and a second multiplexed optical signal based on a second wavelength of the one or more wavelengths;
a first polarization demultiplexer configured to demultiplex the first multiplexed optical signal into a first optical channel based on the first wavelength and a first polarization of the pair of polarizations and a second optical channel based on the first wavelength and a second polarization of the pair of polarizations;
a second polarization demultiplexer configured to demultiplex the second multiplexed optical signal into a third optical channel based on the second wavelength and the first polarization and a fourth optical channel based on the second wavelength and the second polarization; and
a set of detectors configured to recover a set of output signals from the first optical channel, the second optical channel, the third optical channel, and the fourth optical channel.

13. The apparatus according to any of claims 11 to 12, wherein the receiver includes:
a polarization beam splitter configured to receive the optical signal and split the optical signal into a first multiplexed optical signal based on a first polarization of the pair of polarizations and a second multiplexed optical signal based on a second polarization of the pair of polarizations;
a first wavelength demultiplexer configured to demultiplex the first multiplexed optical signal into a first optical channel based on a first wavelength of the one or more wavelengths and the first polarization and a second optical channel based on a second wavelength of the one or more wavelengths and the first polarization;
a second wavelength demultiplexer configured to demultiplex the second multiplexed optical signal into a third optical channel based on the first wavelength and the second polarization and a fourth optical channel based on the second wavelength and the second polarization; and
a set of detectors configured to recover a second of output signals from the first optical channel, the second optical channel, the third optical channel, and the fourth optical channel.

14. The apparatus according to any of claims 11 to 13, wherein the receiver includes:
a polarization beam splitter configured to recover, from the optical signal based on a particular polarization of the pair of polarizations, a pair of optical channels based on the particular polarization;
a wavelength demultiplexer configured to demultiplex, from the pair of optical channels, a first optical channel based on the particular polarization and a first wavelength of the one or more wavelengths and a second optical channel based on the particular polarization and a second wavelength of the one or more wavelengths; and
a pair of detectors configured to recover a set of output signals from the first optical channel based on the first wavelength and the second optical channel based on the second wavelength.

15. A method, comprising:
receiving, via a passive optical network, an optical signal including a set of optical channels which is based on use of a pair of polarizations on each of one or more wavelengths; and
recovering, from the optical signal based on at least one of polarization demultiplexing or polarization selection, at least one of the optical channels from the set of optical channels.
